# EUROPÄISCHE PATENTSCHRIFT

(11) **EP 3 187 753 B1**
(45) Veröffentlichungstag und Bekanntmachung des Hinweises auf die Patenterteilung: **08.01.2020**
(21) Anmeldenummer: 16199332.4
(22) Anmeldetag: 17.11.2016
(51) Int. Cl.: F16H 59/04

(54) **SCHALTWÄHLHEBELVORRICHTUNG ZUM WÄHLEN UND/ODER SCHALTEN VON GANGSTUFEN EINES SCHALTGETRIEBES EINES KRAFTFAHRZEUGES**
GEAR SELECTION LEVER DEVICE FOR SELECTING AND/OR SWITCHING GEAR STAGES OF THE GEARBOX OF A MOTOR VEHICLE
DISPOSITIF DE LEVIER DE SÉLECTION DE VITESSE DESTINÉ À SÉLECTIONNER OU CHANGER LES RAPPORTS D'UNE BOÎTE DE VITESSES MANUELLE D'UN VÉHICULE AUTOMOBILE

(30) Priorität: 18.12.2015 DE 102015226001
(43) Veröffentlichungstag der Anmeldung: 05.07.2017
(73) Patentinhaber: VOLKSWAGEN AKTIENGESELLSCHAFT, 38440 Wolfsburg (DE)
(72) Erfinder: Luther, Norbert, 31073 Grünenplan (DE); Busch, Christian, 38154 Königslutter (DE)

(56) Entgegenhaltungen:
- DE-A1- 1 655 500
- DE-A1- 19 803 593
- DE-A1- 19 805 510
- DE-A1-102008 052 377
- DE-U1- 29 702 964
- US-A1- 2008 210 483

## Beschreibung

Die Erfindung betrifft eine Schaltwählhebelvorrichtung zum Wählen und/oder Schalten von Gangstufen eines Schaltgetriebes eines Kraftfahrzeuges gemäß den Merkmalen des Oberbegriffs des Patentanspruchs 1.

DE1655500 offenbart die Merkmale des Oberbegriffes des Anspruchs 1.

Schaltwählhebelvorrichtungen zum Wählen und/oder Schalten von Gangstufen eines Schaltgetriebes eines Kraftfahrzeuges sind im Stand der Technik in einer Vielzahl bekannt. Eine derartige Schaltwählhebelvorrichtung weist zunächst mindestens einen Schaltwählhebel auf. Mit Hilfe des Schaltwählhebels können die jeweiligen Gangstufen (bzw. die unterschiedlichen Getriebegangstufen) eines Schaltgetriebes eines Kraftfahrzeugs einerseits ausgewählt und/oder entsprechend geschaltet werden. Üblich hierfür ist die sogenannte "H-Schaltung". Wird der Schaltwählhebel im Wesentlichen quer zur Fahrzeugrichtung (Y-Richtung) bewegt, insbesondere aus einer Neutralstellung heraus, so wird zunächst hierdurch die jeweilige Schaltgasse der jeweiligen Gangstufe gewählt. Hiernach wird der Schaltwählhebel im Wesentlichen in der Fahrzeuglängsrichtung (X-Richtung) bewegt (nach vorne oder nach hinten), um dann auch eine spezifische ausgewählte Gangstufe zu schalten bzw. die Einlegung dieser Gangstufe im Schaltgetriebe entsprechend zu realisieren. Die Schaltwählhebelvorrichtung weist im Allgemeinen ein Gehäuse auf, wobei der Schaltwählhebel zumindest teilweise im Gehäuse angeordnet ist, sich zumindest teilweise in den oberen Bereich des Gehäuses erstreckt und/oder hier gelagert ist. Weiterhin ist dann zur Übertragung der jeweiligen Bewegungen des Schaltwählhebels ein Koppelmechanismus, insbesondere im oberen Bereich des Gehäuses vorgesehen und/oder ausgebildet. Der Koppelmechanismus weist im Allgemeinen eine erste und eine zweite Koppelstange auf. Der Schaltwählhebel ist nun einerseits mit einer ersten Koppelstange zum Wählen der jeweiligen Gangstufen und mit einer zweiten Koppelstange zum Schalten der jeweiligen Gangstufen funktional wirksam verbunden. Weiterhin ist ein erster und ein zweiter Umlenkhebel zumindest teilweise verschwenkbar innerhalb des Gehäuses angeordnet und/oder gelagert, wobei die erste Koppelstange mit dem ersten Umlenkhebel und die zweite Koppelstange mit dem zweiten Umlenkhebel wirksam verbunden ist. Der erste Umlenkhebel ist insbesondere in einem entsprechenden Endbereich des Umlenkhebels mit einem ersten Betätigungszug und der zweite Umlenkhebel, insbesondere ebenfalls in einem entsprechenden Endbereich mit einem zweiten Betätigungszug wirksam verbunden. Insbesondere sind die jeweiligen Betätigungszüge mit den jeweiligen Umlenkhebeln mit Hilfe eines verschwenkbar angeordneten Gelenkkopfes verbunden. Die Schaltwählhebelvorrichtung bzw. das Gehäuse der Schaltwählhebelvorrichtung wird im Kraftfahrzeug, insbesondere in eine Konsole des Kraftfahrzeugs entsprechend eingebaut. Insbesondere im eingebauten Zustand der Schaltwählhebelvorrichtung im Kraftfahrzeug weist das Gehäuse dann eine im Wesentlichen vertikal, insbesondere parallel zur Fahrzeug-Hochachse verlaufende Gehäusehochachse (Z-Achse), eine im Wesentlichen quer, insbesondere parallel zur Fahrzeug-Querachse verlaufende Gehäusequerachse (Y-Achse), und eine im Wesentlichen längs, insbesondere parallel zur Fahrzeug-Längsachse verlaufende Gehäuselängsachse (X-Achse) auf.

So ist aus der DE 698 01 608 T2 eine Schaltwählhebelvorrichtung bekannt, die einen Schaltwählhebel aufweist, der insbesondere gemäß einer "H-Schaltung" bewegbar ist, um die Gangstufen eines Schaltgetriebes auszuwählen und zu schalten. Der Schaltwählhebel ist über erste und zweite Koppelelemente bzw. erste und zweite Umlenkhebel wirksam mit entsprechenden Betätigungszügen verbunden, insbesondere sind die Endbereiche der Umlenkhebel wirksam mit den jeweiligen Enden der Betätigungszüge verbunden. Weiterhin ist jedem Betätigungszug ein Betätigungszug-Halteelement zugeordnet, wobei die Betätigungszug-Halteelemente an einem gemeinsamen Widerlagerelement angeordnet sind. Die Betätigungszug-Halteelemente bzw. das Widerlagerelement dient dazu, das bei einer Betätigung/Verschwenkung der Umlenkhebel der jeweilige Betätigungszug relativ zur äußeren Hülle des zumeist als Bowdenzug ausgebildeten Betätigungszuges bewegbar ist. Bei der hier bekannten Schaltwählhebelvorrichtung erstreckt sich die Achse des Schaltwählhebels im Wesentlichen parallel zur Gehäusehochachse (Z-Achse), wobei auch die Betätigungszug-Halteelemente bzw. deren Achse sich im Wesentlichen parallel zur Fahrzeug-Hochachse bzw. zur Gehäusehochachse (Z-Achse) erstrecken und damit die Führung/Ausrichtung der Betätigungszüge, die sich von den Endbereichen der Umlenkhebeln bis zu den Betätigungszug-Halteelemente erstrecken entsprechend vorgeben ist. Anders ausgedrückt, in diesem - oberen - Bereich der jeweiligen Betätigungszüge erstrecken sich diese zumindest "oberen Teilbereiche" der Betätigungszüge ebenfalls in Richtung der Fahrzeug-Hochachse bzw. in Richtung der Gehäusehochachse (Z-Achse).

So sind aus der DE 10 2007 060 538 A1 Betätigungszug-Haltelemente bekannt mit deren Hilfe insbesondere die äußere Umgebungshülle, also das äußere schlauchartige Element positionierbar und/oder befestigbar ist, insbesondere an einem gemeinsamen Widerlagerelement, das dann mit dem Gehäuse der Schaltwählhebelvorrichtung verbindbar ist.

Die aus der DE 698 01 608 T2 bekannte Schaltwählhebelvorrichtung bzw. auch andere, wie die in der DE 10 2007 060 538 A1 beschriebene Schaltwählhebelvorrichtung, sind insbesondere für ein "Linkslenker-Fahrzeug" geeignet. Bei einem Linkslenker-Fahrzeug ist das Lenkrad und sind die zugehörigen Komponenten im Wesentlichen in der linken Fahrzeughälfte angeordnet. Die insbesondere im Wesentlichen in Richtung der Fahrzeug-Hochachse bzw. in Richtung der Gehäusehochachse (Z-Achse) aus dem Gehäuse der Schaltwählhebelvorrichtung austretenden Betätigungszüge werden dann einem entsprechenden Tunneldurchtritt zugeführt und von hier aus über den Tunnel zum Motorraum des Kraftfahrzeuges geführt, damit hier dann mit Hilfe der entsprechenden Betätigungszüge (Bowdenzüge) und den mit den Enden der Betätigungszüge dann dort verbundenen Komponenten, insbesondere der getriebeseitige Schaltbetätigungsvorrichtung, die jeweiligen Gangstufen bzw. die jeweiligen unterschiedlichen Getriebe-Gangstufen innerhalb des Schaltgetriebes realisiert werden können.

Bei einem typischen Linkslenker-Kraftfahrzeug ist der Tunneldurchtritt und/oder getriebeseitige Schaltbetätigungsvorrichtung in der gleichen Längshälfte, d. h. linken Hälfte, des Kraftfahrzeugs angeordnet, wie die Schaltwählhebelvorrichtung. So ein Fahrzeug wird für Zwecke dieses Textes als "Asymmetrie-Fahrzeug" kurzgenannt. Es handelt sich typischerweise um ein ursprünglich als Linkslenker-Fahrzeug konstruiertes Fahrzeug, der einen quer angeordneten Antriebsstrang aufweist, wobei der Motor rechts und das Getriebe links angeordnet ist, u. a. wegen besserer Gewichtsverteilung bei Fahrt nur mit Fahrer. Der Tunneldurchtritt und/oder getriebeseitige Schaltbetätigungsvorrichtung sind dann auch in der linken Längshälfte angeordnet. Es kann sich aber entsprechend um ein ursprünglich als Rechtslenker-Fahrzeug konstruiertes Fahrzeug handeln, das den Motor links und das Getriebe rechts angeordnet hat, wobei auch der Tunneldurchtritt und/oder getriebeseitige Schaltbetätigungsvorrichtung dann in der rechten Längshälfte angeordnet. Als ein "Asymmetrie-Fahrzeug" ist auch ein Fahrzeug mit einem längs angeordnetem Antriebsstrang zu verstehen , bei dem der Motor und das Getriebe im Wesentlichen in der Fahrzeug-Längsachse angeordnet sind, und die getriebeseitige Schaltbetätigungsvorrichtung an der gleichen Seite liegt, wie die Schaltwählhebelvorrichtung bzw. das Lenkrad.

Bei diesem Asymmetrie-Kraftfahrzeug sind mit Hilfe der bekannten Schaltwählhebelvorrichtungen entsprechende komfortable Seilradien, die eine geringe Seilreibung zur Folge haben, realisierbar.

Anders ist dies jedoch dann bei einem "Rechtslenker-Fahrzeug", wo also das Lenkrad und die zugehörigen Komponenten im Wesentlichen in der rechten Fahrzeughälfte vorgesehen bzw. angeordnet sind. Einerseits schaltet der Fahrer hier (dies gilt bspw. für die "Rechtslenker-Fahrzeuge" in GB und Australien) mit der linken Hand den Schaltwählhebel, andererseits, dies gilt insbesondere für größere Fahrzeuge wie Pick-Up's, LKW's etc., ist dann bei einem Rechtslenker-Fahrzeug die Schaltwählhebelvorrichtung im Wesentlichen nicht unbedingt auch mittig im Kraftfahrzeug angeordnet, sondern im Wesentlichen eher auch in der rechten Fahrzeughälfte angeordnet bzw. (in Fahrzeugvorwärts-Richtung gesehen) von der Fahrzeugmittellängsachse nach rechts versetzt angeordnet. Da sich Linkslenker-Fahrzeuge und die davon abgeleiteten Rechtslenker-Fahrzeuge im Wesentlichen nur durch die Anordnung des Lenkrades und der zugehörigen Komponenten wie der Schaltwählhebelvorrichtungen, Fahrpedale, Amaturen etc. unterscheiden, aber die übrigen Komponenten des jeweiligen Fahrzeuges im Wesentlichen gleich sind, insbesondere der jeweilige Tunneldurchtritt, der Tunnel selbst sowie die Anordnung des Motors und/oder des Getriebes im Motorraum nahezu identisch sind, sind im Allgemeinen nicht nur die Betätigungszüge bei einem Rechtslenker-Fahrzeug länger ausgebildet als bei einem Linkslenker-Fahrzeug, sondern diese verlaufen auch in einer anderen Art und Weise.

Bei einem typischen von einem Linkslenker abgeleiteten Rechtslenker-Kraftfahrzeug ist der Tunneldurchtritt und/oder getriebeseitige Schaltbetätigungsvorrichtung in der anderen Längshälfte, d. h. linken Hälfte, des Kraftfahrzeugs angeordnet, als die rechts liegende Schaltwählhebelvorrichtung. So ein Fahrzeug wird für Zwecke dieses Textes als "Symmetrie-Fahrzeug" kurzgenannt. Es kann aber natürlich auch ein ursprünglich als Rechtslenker-Fahrzeug konstruiertes Linkslenker sein, das den Motor links und das Getriebe rechts angeordnet hat, wobei auch der Tunneldurchtritt und/oder getriebeseitige Schaltbetätigungsvorrichtung dann in der rechten Längshälfte angeordnet ist und die Schaltwählhebelvorrichtung jetzt auf der linken Seite hat. Ebenso kann es ein Fahrzeug mit einem längs angeordnetem Antriebsstrang zu sein, bei dem der Motor und das Getriebe im Wesentlichen in der Fahrzeug-Längsachse angeordnet sind, und die getriebeseitige Schaltbetätigungsvorrichtung an der anderen Seite liegt, als die Schaltwählhebelvorrichtung bzw. das Lenkrad.

Die Termine "Asymmetrie" bzw. "Symmetrie" dürfen nicht so eng verstanden werden, dass die genannten Komponenten genau symmetrisch d.h. in gleicher Entfernung von der Längsachse des Fahrzeugs angeordnet sind, es ist die Zuordnung zu der einen oder der anderen Fahrzeughälfte wesentlich.

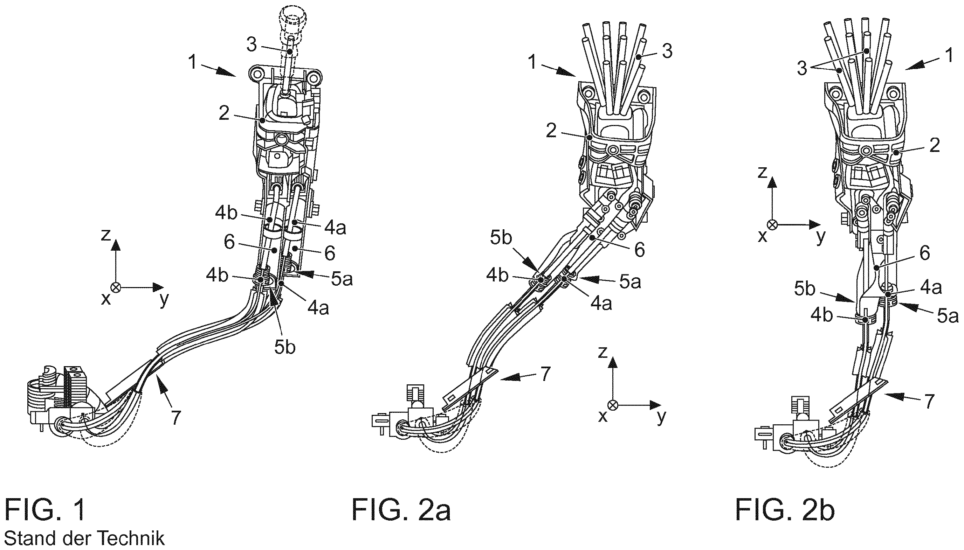

So zeigt Fig. 1 eine im Stand der Technik bekannte Schaltwählhebelvorrichtung 1 zum Wählen und/oder zum Schalten von Gangstufen eines nicht näher dargestellten Schaltgetriebes eines Kraftfahrzeugs, wobei die Schaltwählhebelvorrichtung 1 ein Gehäuse 2 und einen Schaltwählhebel 3 aufweist. Gut ersichtlich in Fig. 1 sind die auch im Wesentlichen in Richtung der Gehäusehochachse (Z-Achse) nach unten wegführenden Betätigungszüge 4a, 4b, und die im Wesentlichen in der gleichen Richtung angeordneten Betätigungszug-Halteelemente 5a bzw. 5b bzw. das hier gemeinsam realisierte Widerlagerelement 6, das nahezu teilweise auch gehäuseförmig ausgebildet ist. Weiterhin ist in Fig. 1 nun dargestellt der Verlauf der Betätigungszüge 4a und 4b und bzw. die Anordnung der hier dargestellten Schaltwählhebelvorrichtung 1 für ein "Symmetrie-Fahrzeug", wobei die Betätigungszüge 4a und 4b bis zum Tunneldurchtritt 7 zumindest teilweise seitlich weggeführt werden müssen und sich in bestimmten Bereichen daher enge Seilradien der Betätigungszüge 4a und 5b ergeben. Die engen Seilradien für die Betätigungszüge 4a und 4b erhöhen einerseits die Seilreibung, andererseits ist die Führung der Betätigungszüge 4a und 4b konstruktiv sehr aufwändig und auch der Montageaufwand entsprechend erhöht. Die bekannten Schaltwählhebelvorrichtungen eignen sich daher nicht für ein Symmetrie-Fahrzeug bzw. es müssen für Symmetrie-Fahrzeuge separate völlig andere Schaltwählhebelvorrichtungen konstruktiv sehr aufwändig separat hergestellt werden. Dies zieht weitere Problempunkte nach sich, wie nicht nur eine separate Herstellung einer separaten Schaltwählhebelvorrichtung, die für Symmetrie-Fahrzeuge geeignet ist, sondern die auch separat gelagert und/oder auch anders gewartet werden muss, was entsprechende weitere Kosten mit sich bringt. Die Ausbildung/Ausführung der bekannten Schaltwählhebelvorrichtungen ist daher noch nicht optimal, insbesondere da die bekannten Schaltwählhebelvorrichtungen nicht unabhängig von der spezifischen Ausführung des Fahrzeuges, nämlich nicht für ein Asymmetrie-Fahrzeug und zugleich auch für ein Symmetrie-Fahrzeug verwendet werden können.

Der Erfindung liegt daher die Aufgabe zugrunde, eine bekannte Schaltwählhebelvorrichtung zum Wählen und/oder Schalten von Gangstufen eines Schaltgetriebes eines Kraftfahrzeugs nun derart auszugestalten und weiterzubilden, dass die Führung der Betätigungszüge von der Schaltwählhebelvorrichtung zum Tunneldurchtritt verbessert ist, insbesondere die Schaltwählhebelvorrichtung sowohl für ein Asymmetrie-Fahrzeug wie auch für ein Symmetrie-Fahrzeug geeignet ist, wobei im Endeffekt der Montage- und/oder Herstellungsaufwand und die damit verbundenen Kosten entsprechend verringert sind.

Die zuvor aufgezeigte Aufgabe ist nun für die Schaltwählhebelvorrichtung zunächst durch die Merkmale des Patentanspruches 1 gelöst.

Zunächst ist nun die jeweilige Schwenkachse des ersten und/oder des zweiten Umlenkhebels in einem bestimmten ersten Winkel schräg zu der aus Gehäuselängsachse (X-Achse) und Gehäusequerachse (Y-Achse) gebildeten Ebene angeordnet. Dadurch ist insbesondere nun die so ausgebildete Schaltwählhebelvorrichtung sowohl für ein Asymmetrie-Fahrzeug wie auch für ein Symmetrie-Fahrzeug grundsätzlich geeignet. Denn insbesondere beim Einsatz der Schaltwählhebelvorrichtung bei einem Symmetrie-Fahrzeug können nun die Betätigungszüge zumindest teilweise schräg zur Seite bzw. nach unten das Gehäuse der Schaltwählhebelvorrichtung entsprechend verlassend ausgebildet werden, was im Einzelnen im Folgenden noch näher erläutert werden darf.

Insbesondere ist die jeweilige Schwenkachse des ersten und/oder des zweiten Umlenkhebels in einem bestimmten ersten Winkel schräg zur Gehäusequerachse (Y-Achse) oder in einem bestimmten ersten Winkel schräg zu einer Parallelen der Gehäusequerachse (Y-Achse) angeordnet, wobei die jeweilige Schwenkachse des ersten und/oder des zweiten Umlenkhebels in der durch die Gehäusehochachse (Z-Achse) und durch die Gehäusequerachse (Y-Achse) gebildeten Ebene oder in einer hierzu parallelen Ebene liegt bzw. liegen. Bei der bevorzugten Ausführungsform der erfindungsgemäßen Schaltwählhebelvorrichtung liegt daher die schräg angeordneten jeweilige Schwenkachse des ersten und/oder des zweiten Umlenkhebels insbesondere in der durch die Gehäusehochachse (Z-Achse) und durch die Gehäusequerachse (Y-Achse) gebildeten Ebene oder in einer hierzu parallelen Ebene (insbesondere in Abhängigkeit davon, wo der Ursprung des Koordinatensystems innerhalb des Gehäuses der Schaltwählhebelvorrichtung ist bzw. liegt).

Die jeweiligen Endbereiche des ersten und/oder des zweiten Umlenkhebels sind nun wirksam mit dem jeweiligen ersten und/oder zweiten Betätigungszug, insbesondere über einen Gelenkkopf verbunden. Zur Führung und/oder Richtungsvorgabe des ersten und/oder des zweiten Betätigungszuges, zumindest im unteren Bereich des Gehäuses der Schaltwählhebelvorrichtung - bei eingebauter Schaltwählhebelvorrichtung - ist nun ein erstes und ein zweites Betätigungszug-Halteelement vorgesehen. Das erste und/oder das zweite Betätigungszug-Halteelement ist im Wesentlichen benachbart zu den Endbereichen der Umlenkhebel vorgesehen, insbesondere sind das erste und zweite Betätigungszug-Halteelement an einem gemeinsamen Widerlagerelement angeordnet. Die "Baueinheit" aus den beiden Betätigungszug-Halteelementen, also aus dem ersten und zweiten Betätigungszug-Halteelement und dem Widerlagerelement ist nun in Abhängigkeit, ob die Schaltwählhebelvorrichtung für ein Symmetrie-Fahrzeug oder für ein Asymmetrie-Fahrzeug ausgebildet werden soll, entsprechend spezifisch gestaltet bzw. wird dann die relative Lage des Widerlagerelementes mit den beiden Betätigungszug-Haltelementen am Gehäuse der Schaltwählhebelvorrichtung in jeweils unterschiedlichen Positionen angeordnet bzw. positioniert, was im Folgenden auch näher erläutert werden wird.

Von besonderem Vorteil ist nun, dass die Betätigungszug-Halteelemente und/oder das Widerlageelement so angeordnet und/oder ausgebildet ist, so dass eine Führung bzw. eine Richtungsvorgabe der Betätigungszüge, die das Gehäuse der Schaltwählhebelvorrichtung verlassen, also die Führung der Betätigungszüge in deren oberen Bereich im Wesentlichen in einer Ebene realisiert ist, die durch die Gehäusehochachse (Z-Achse) und durch die Gehäusequerachse (Y-Achse) gebildet ist bzw. hierzu parallel ist (wieder in Abhängigkeit davon, wo der Ursprung des angesprochenen Koordinatensystems liegt).

Für den Fall, dass die Schaltwählhebelvorrichtung für ein Symmetrie-Fahrzeug ausgebildet ist, ist nun die Führung bzw. die Richtungsvorgabe der Betätigungszüge in der Nachbarschaft zu den Endbereichen der Umlenkhebel, insbesondere für das Verlassen des Gehäuses der Schaltwählhebelvorrichtung in einem bestimmten zweiten Winkel schräg zur Gehäusehochachse (Z-Achse) bzw. schräg zu einer Parallelen der Gehäusehochachse (Z-Achse) realisiert. Hierbei sind die Betätigungszug-Halteelemente und/oder das Widerlageelement entsprechend relativ zu den verschwenkbaren Umlenkhebeln angeordnet und/oder positioniert. Der zuvor genannte bestimmte zweite Winkel ist im Wesentlichen doppelt so groß ausgebildet, wie der zuvor genannte bestimmte erste Winkel. Dies hat nämlich mehrere Vorteile. Zunächst wird eine Führung der Betätigungszüge, zumindest in deren oberen Bereich im Wesentlichen schräg seitlich nach unten aus dem Gehäuse der Schaltwählhebelvorrichtung heraustretend realisiert. Aber aufgrund der Ausbildung des bestimmten zweiten Winkels in der doppelten Größe des bestimmten ersten Winkels kann die Schaltwählhebelvorrichtung auch nun zugleich insbesondere für einen Asymmetrie-Fahrzeug ausgebildet bzw. verwendet werden, aber mit dem Unterschied, dass hierbei dann die Führung bzw. Richtungsvorgabe der Betätigungszüge (zumindest in deren oberen Bereichen) aus dem Gehäuse der Schaltwählhebelvorrichtung heraus im Wesentlichen in Richtung der Gehäusehochachse (Z-Achse) bzw. parallel zur Gehäusehochachse (Z-Achse) realisiert ist. Hierbei sind dann die Betätigungszug-Halteelemente und/oder das Widerlagerelement entsprechend relativ zu den verschwenkbaren Umlenkhebeln angeordnet und/oder positioniert, insbesondere so dass eine im Wesentlichen zum Gehäuse der für ein Asymmetrie-Fahrzeug verwendeten Schaltwählhebelvorrichtung im Wesentlichen vertikal nach unten das Gehäuse der Schaltwählhebelvorrichtung verlassende Betätigungszüge realisiert sind.

Für beide zuvor genannten Fälle, also wenn die Schaltwählhebelvorrichtung für ein Symmetrie-Fahrzeug sowie für ein Asymmetrie-Fahrzeug ausgebildet ist, sind die jeweiligen Umlenkhebel im Wesentlichen in einer jeweiligen Ebene, die durch eine dem bestimmten zweiten Winkel jeweils halbierende Winkelhalbierende bestimmt ist, entsprechend verschwenkbar. Die jeweiligen Winkel zwischen der zuvor genannten Winkelhalbierenden und der Führung der jeweiligen Betätigungszüge, wenn die Schaltwählhebelvorrichtung für ein Symmetrie-Fahrzeug oder für ein Asymmetrie-Fahrzeug ausgebildet ist, entspricht im Wesentlichen dem zuvor genannten bestimmten ersten Winkel. Dies hat einen kinematischen und schaltungstechnischen Vorteil. Nicht nur werden hierdurch entsprechende Betätigungskräfte der jeweiligen Komponenten teilweise zueinander entsprechend kompensiert unabhängig davon, ob die Schaltwählhebelvorrichtung für ein Symmetrie-Fahrzeug oder für ein Asymmetrie-Fahrzeug ausgebildet ist, sondern es wird ein weiterer Vorteil realisiert: Die jeweiligen Bewegungen/Auslenkungen der Betätigungszüge bei einer für einen Asymmetrie-Fahrzeug bzw. für ein Symmetrie-Fahrzeug ausgebildeten Schaltwählhebelvorrichtung sind nämlich in Richtung der Gehäusehochachse (Z-Achse) und in Richtung der Gehäusequerachse (Y-Achse) im Wesentlichen immer gleich groß. Damit kann ein schaltungstechnischer Vorteil realisiert werden, insbesondere ist auch die Montage und Einstellung der Betätigungszüge damit erheblich vereinfacht.

Für die so ausgestaltete Schaltwählhebelvorrichtung ist nun unabhängig davon, ob diese für einen Asymmetrie-Fahrzeug oder für ein Symmetrie-Fahrzeug ausgebildet ist, auch ein einheitlicher Tunneldurchtritt in Richtung des Motorraumes verwendbar, insbesondere unter Beibehaltung der oben erwähnten Vorteile.

Insbesondere ist das erste und das zweite Betätigungszug-Halteelement im Wesentlichen zumindest teilweise hülsenförmig ausgebildet, wobei die Längsachse der hülsenförmig ausgebildeten Betätigungszug-Halteelemente im Wesentlichen die Führungsrichtung der jeweiligen oberen Bereiche der Betätigungszüge vorgibt bzw. im Wesentlichen mit definiert, was im Folgenden auch noch näher erläutert werden wird.

Die erfindungsgemäße Schaltwählhebelvorrichtung ist daher sowohl für ein Asymmetrie-Fahrzeug als auch für ein Symmetrie-Fahrzeug gut geeignet, wobei der Schaltwählhebel im Wesentlichen parallel zur Gehäusehochachse (Z-Achse) vorgesehen ist und zur Übertragung der jeweiligen Bewegungen des Schaltwählhebels auf die erste und/oder zweite Koppelstange eine Koppelmechanismus im oberen Bereich des Gehäuses vorgesehen und/oder ausgebildet ist. Insbesondere der untere Bereich des Gehäuses kann dann auch in Abhängigkeit der Ausbildung der Schaltwählhebelvorrichtung für ein Asymmetrie-Fahrzeug oder für ein Symmetrie-Fahrzeug entsprechend spezifisch ausgebildet werden, insbesondere mit Hilfe der jeweiligen dann - relativ - in unterschiedlichen Positionen montierbaren Betätigungszug-Halteelemente bzw. dem entsprechenden Widerlagerelement.

Im Ergebnis sind die eingangs genannten Nachteile vermieden und entsprechende Vorteile erzielt.

Es gibt nun eine Vielzahl von Möglichkeiten, die erfindungsgemäße Schaltwählhebelvorrichtung in vorteilhafter Art und Weise auszugestalten und weiterzubilden. Hierfür darf zunächst auf die dem Patentanspruch 1 nachgeordneten Patentansprüche verwiesen werden. Im Folgenden darf nun eine bevorzugte Ausführungsform der Erfindung anhand der Zeichnung und der dazugehörigen Beschreibung näher erläutert werden. In der Zeichnung zeigt:
- Fig. 1: eine bereits eingangs geschilderte und im Stand der Technik bekannte Schaltwählhebelvorrichtung für ein Symmetrie-Fahrzeug in schematischer Darstellung,
- Fig. 2a,2b: eine erfindungsgemäße Schaltwählhebelvorrichtung in schematischer Darstellung und Anordnung für ein Symmetrie-Fahrzeug (Fig. 2a) bzw. für ein Asymmetrie-Fahrzeug (Fig. 2b), mit jeweiliger unterschiedlicher Anlenkung bzw. Anordnung des Widerlagerelementes mit den beiden Betätigungszug-Halteelementen etc.,
- Fig. 3a, 3b: in schematischer Darstellung eine erfindungsgemäße Schaltwählhebelvorrichtung, ausgebildet für ein Symmetrie-Fahrzeug von hinten (Fig. 3a) bzw. von vorne (Fig. 3b),
- Fig. 4a, 4b: in schematischer Darstellung eine erfindungsgemäße Schaltwählhebelvorrichtung, ausgebildet für ein Asymmetrie-Fahrzeug von hinten (Fig. 4a) bzw. von vorne (Fig. 4b),
- Fig. 5: in schematischer Darstellung wesentliche Komponenten der erfindungsgemäßen Schaltwählhebelvorrichtung, jedoch nur mit teilweiser Darstellung des Gehäuses für eine nähere Veranschaulichung der Betätigungszug-Abgänge" dargestellt jeweils für ein Symmetrie-Fahrzeug und für ein Asymmetrie-Fahrzeug in ein und derselben Figur (hier Fig. 5),
- Fig. 6a, 6b: in jeweiliger schematischer Darstellung die erfindungsgemäße Schaltwählhebelvorrichtung, ausgebildet für ein Symmetrie-Fahrzeug von hinten (Fig. 6a) bzw. von der Seite (Fig. 6b), jedoch Fig. 6b ohne Darstellung des Gehäuses,
- Fig. 7a, 7b: in jeweiliger schematischer Darstellung die erfindungsgemäße Schaltwählhebelvorrichtung, ausgebildet für ein Asymmetrie-Fahrzeug von hinten (Fig. 7a) bzw. von der Seite (Fig. 7b), jedoch Fig. 7b ohne Darstellung des Gehäuses und
- Fig. 8: in rein schematischer Darstellung ein Achsen-System (bzw. ein Koordinatensystem), nämlich X-, Y- und Z-Achse mit vereinfachter Darstellung der schrägen Achse eines Umlenkhebels, der angedeuteten Schwenkbewegung des Umlenkhebels auf einer Winkelhalbierenden, sowie der Darstellung der jeweiligen Winkel und der Zugrichtungen eines jeweiligen Betätigungszuges im Fall der Ausbildung der Schaltwählhebelvorrichtung für ein Asymmetrie- bzw. ein Symmetrie-Fahrzeug.

Fig. 1 zeigt in schematischer Darstellung eine im Stand der Technik bekannte Schaltwählhebelvorrichtung 1, wie bereits eingangs beschrieben.

Im Folgenden darf nun eine erfindungsgemäße Schaltwählhebelvorrichtung 1 anhand der Fig. 2 bis 8 näher beschrieben werden. Die bereits in der Fig. 1 mit entsprechenden Bezugszeichen bezeichneten Komponenten werden auch in den Fig. 2 bis 8 im Wesentlichen mit den gleichen Bezugszeichen benannt werden:
Die Fig. 2 bis 7 zeigen nun - zumindest teilweise - jeweils eine erfindungsgemäße Schaltwählhebelvorrichtung 1 zum Wählen und/oder Schalten von Gangstufen eines Schaltgetriebes eines im Einzelnen nicht näher dargestellten Kraftfahrzeuges.

Die in den Fig. 2 bis 8 zumindest teilweise dargestellte jeweilige erfindungsgemäße Schaltwählhebelvorrichtung 1 ist insbesondere sowohl für ein Asymmetrie-Fahrzeug wie auch für ein Symmetrie-Fahrzeug ausgebildet bzw. geeignet, insbesondere entsprechend ausgestaltbar, was die eingangs bereits erwähnten Vorteile mit sich bringt und nun hier näher erläutert werden darf. Zunächst darf allgemein aber folgendes auch unter Bezugnahme auf die Fig. 2 bis 8 ausgeführt werden:
Die Schaltwählhebelvorrichtung 1 weist ein in den Figuren teilweise dargestelltes, teilweise nicht dargestelltes Gehäuse 2 auf. Weiterhin weist die Schaltwählhebelvorrichtung 1 mindestens einen Schaltwählhebel 3 auf bzw. ist mindestens ein Schaltwählhebel 3 vorgesehen, der sich zumindest teilweise in das Gehäuse 2 der Schaltwählhebelvorrichtung 1 erstreckt bzw. hier angeordnet und/oder gelagert ist. Der Schaltwählhebel 3 ist insbesondere im Wesentlichen parallel zur Gehäusehochachse (Z-Achse) vorgesehen bzw. angeordnet, wobei zur Übertragung der Bewegungen des Schaltwählhebels 3 im oberen Bereich des Gehäuses 2 ein nicht näher bezeichneter Koppelmechanismus vorgesehen und/oder ausgebildet ist.

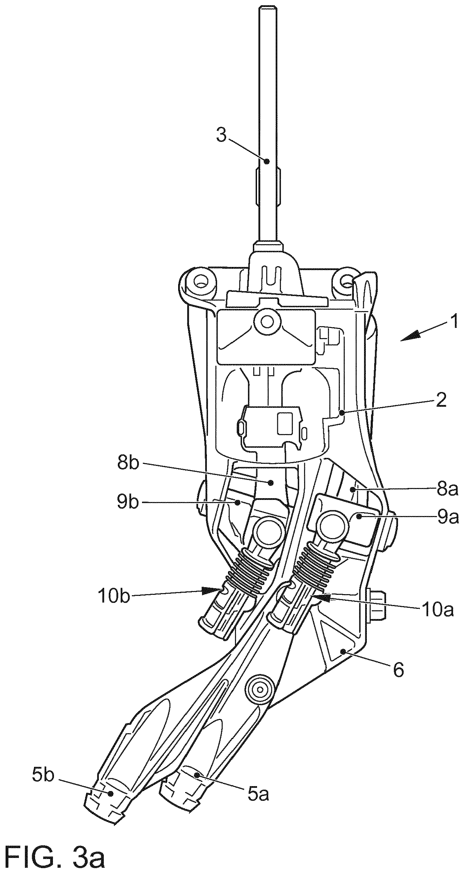

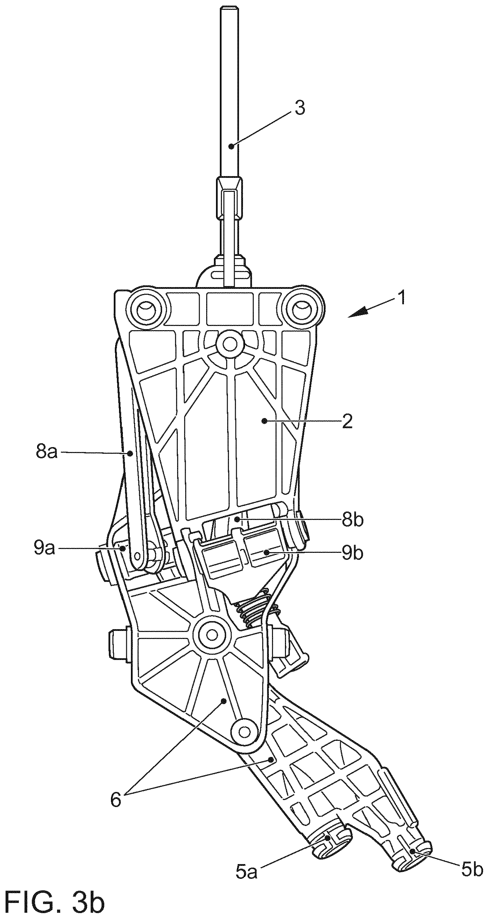

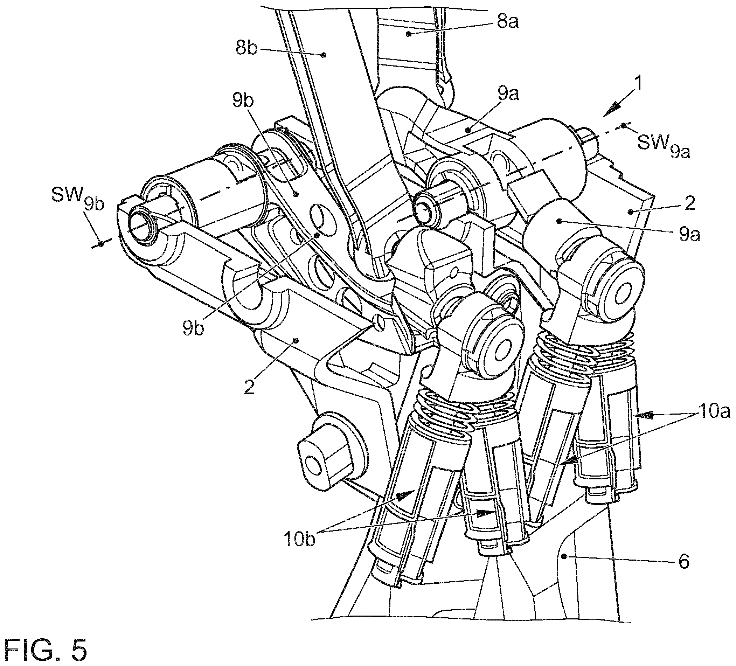

Die Schaltwählhebelvorrichtung 1 weist daher zunächst den Schaltwählhebel 3 auf, der mit einer ersten Koppelstange 8a zum Wählen der jeweiligen Gangstufen und mit einer zweiten Koppelstange 8b zum Schalten der jeweiligen Gangstufen funktional wirksam verbunden ist. Weiterhin ist ein erster und ein zweiter Umlenkhebel 9a und 9b vorgesehen, wobei der erste und der zweite Umlenkhebel 9a und 9b zumindest teilweise verschwenkbar innerhalb des Gehäuses 2 angeordnet und/oder gelagert sind. Die erste Koppelstange 8a ist mit dem ersten Umlenkhebel 9a und die zweite Koppelstange 8b mit dem zweiten Umlenkhebel 9b wirksam verbunden. Oben Vorstehendes ist insbesondere auch aus den Fig. 3 bis 4, insbesondere aber aus der Fig. 5 ersichtlich.

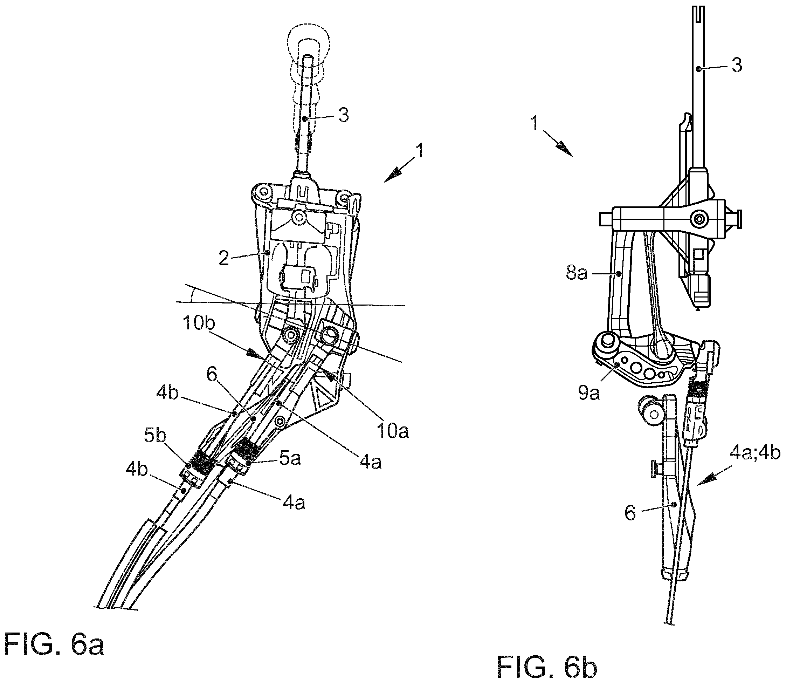

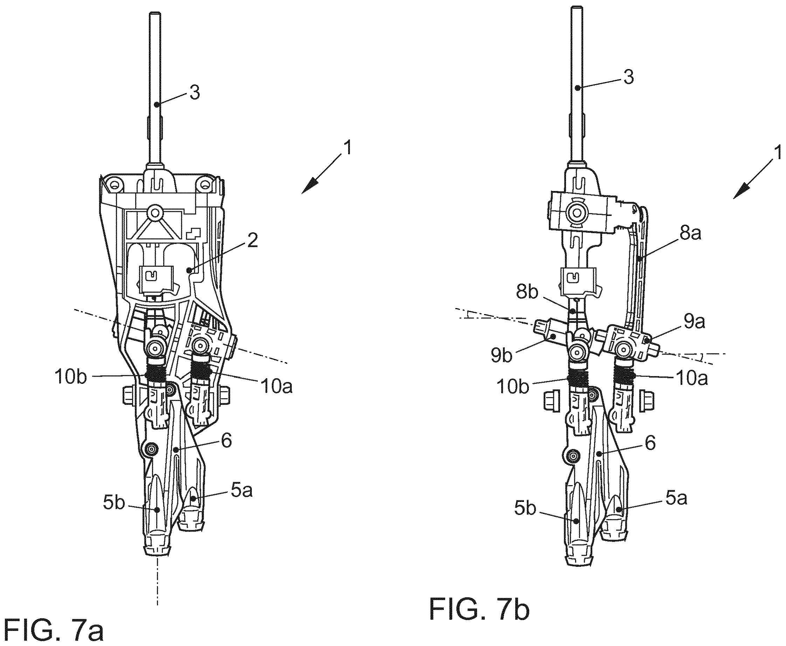

Weiterhin zeigen die Fig. 2 bis 7, dass der erste Umlenkhebel 9a mit einem ersten Betätigungszug 4a und der zweite Umlenkhebel 9b mit einem zweiten Betätigungszug 4b wirksam verbunden ist. Die Betätigungszüge 4a und 4b sind insbesondere in den Fig. 2a, 2b sowie in den Fig. 6a und 6b dargestellt, wobei die Betätigungszüge in den Fig. 3 bis 5 und in Fig. 7 nicht im Einzelnen dargestellt sind, sondern hier im Wesentlichen aber Einstellvorrichtungen 10a, 10b, insbesondere aber auch Betätigungszug-Halteelemente 5a, 5b und ein Widerlagerelement 6 in allen Figuren gut erkennbar sind.

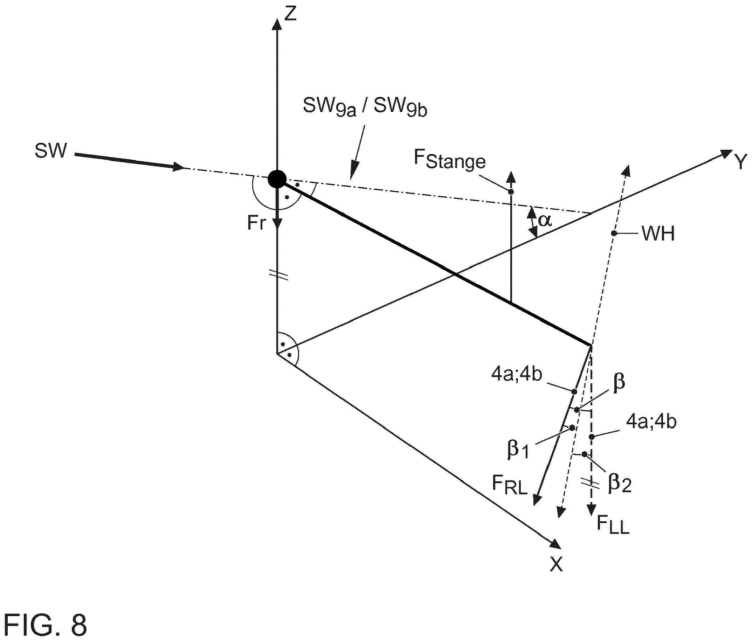

Die beiden Betätigungszüge 4a und 4b werden insbesondere über nicht näher dargestellte bzw. über teilweise nicht näher bezeichnete Gelenkköpfe mit dem jeweiligen ersten bzw. zweiten Umlenkhebel 9a bzw. 9b verbunden. Bei - im Kraftfahrzeug eingebautem Zustand - kann das Gehäuse 2 ein entsprechendes virtuelles "Koordinatensystem" aufweisen, das im Folgenden insbesondere auch zum besseren Verständnis der Erfindung in den Fig. 2 bis 7 schematisch angedeutet ist, wobei insbesondere in Fig. 8 dieses Koordinatensystem nochmals in vergrößerter Darstellung dargestellt ist, einschließlich einer vereinfachten schematischen Darstellung der Anordnung und/oder Verschwenkung eines ersten und/oder zweiten Umlenkhebels 9a bzw. 9b, was zu der Fig. 8 im Folgenden noch ausführlicher erläutert werden wird.

Allgemein soll aber nun gelten, dass das Gehäuse 2 bei - im Kraftfahrzeug eingebautem Zustand - eine im Wesentlichen vertikal, insbesondere parallel zur Fahrzeug-Hochachse verlaufende Gehäusehochachse, nämlich Z-Achse, eine im Wesentlichen quer-, insbesondere parallel zur Fahrzeug-Querachse verlaufende Gehäusequerachse, nämlich Y-Achse, und eine im Wesentlichen längs, insbesondere parallel zur Längsachse verlaufende Gehäuselängsachse, nämlich eine X-Achse aufweist. Ein derartiges virtuelles Koordinatensystem ist notwendig zur Beschreibung der Ebenen, Winkel und/oder der Verläufe/Ausrichtungen der oberen Bereiche der Betätigungszüge 4a bzw. 4b, die im Wesentlichen nach unten aus dem Gehäuse 2 herausgeführt werden.

Die eingangs genannten Nachteile sind nun zunächst dadurch vermieden bzw. die entsprechenden Vorteile sind nun dadurch erzielt, dass die jeweilige Schwenkachse SW des ersten und/oder des zweiten Umlenkhebels 9a bzw. 9b, nämlich die jeweilige Schwenkachse SW₉ₐ bzw. SW_{9b} in einem bestimmten ersten Winkel a schräg zu der aus der Gehäuselängsachse, nämlich der X-Achse und der Gehäusequerachse, nämlich der Y-Achse gebildeten Ebene angeordnet ist bzw. sind.

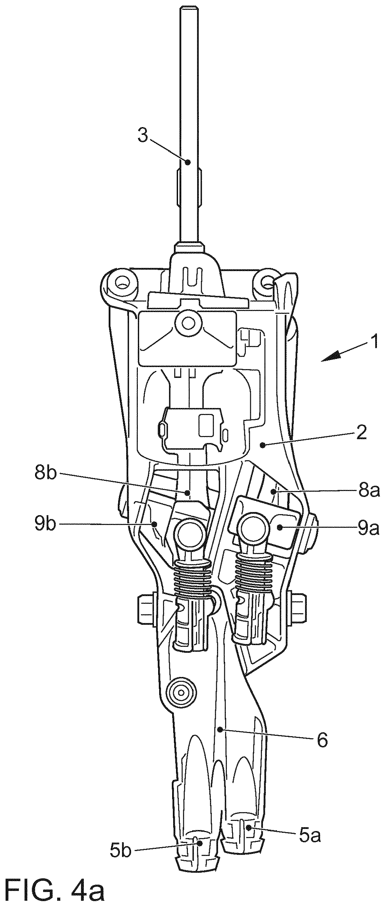

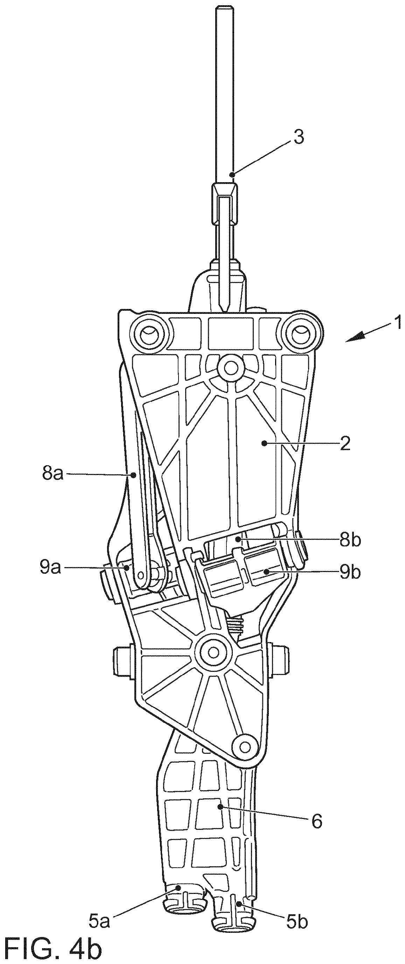

Die bevorzugte spezifische Anordnung einer Schwenkachse SW, insbesondere beider Schwenkachsen SW₉ₐ und SW_{9b} des ersten und zweiten Umlenkhebels 9a bzw. 9b ist in der Fig. 8 im Einzelnen dargestellt, aber auch insbesondere aus den Fig. 3, 4 sowie aus den Fig. 6 und 7 ersichtlich. Durch diese entsprechend schräge Anordnung der Schwenkachsen SW₉ₐ und SW_{9b} des ersten und zweiten Umlenkhebels 9a und 9b ist nun insbesondere die Voraussetzung dafür geschaffen, dass die Schaltwählhebelvorrichtung 1 nun für ein Asymmetrie-Fahrzeug sowie auch für ein Symmetrie-Fahrzeug geeignet ist bzw. verwendet werden kann. Insbesondere können nun einerseits, wenn die Schaltwählhebelvorrichtung 1 für ein Symmetrie-Fahrzeug verwendet wird, so wie in Fig. 2a dargestellt, die einzelnen Betätigungszüge 4a und 4b schräg seitlich nach unten aus dem Gehäuse 2 herausgeführt werden. Für den Fall, dass die Schaltwählhebelvorrichtung 1 für ein Asymmetrie-Fahrzeug ausgebildet ist, so wie in Fig. 2b dargestellt, können nun ebenfalls die Betätigungszüge 4a und 4b aus dem Gehäuse 2 im Wesentlichen vertikal nach unten herausgeführt werden, insbesondere in Richtung der Gehäusehochachse, nämlich in Z-Richtung, so wie in Fig. 2b dargestellt. An dieser Stelle darf noch angemerkt werden, dass die Fig. 2a und 2b jeweils verschiedene Stellungen des Schaltwählhebels 3 zeigen bzw. andeuten sollen.

Allen in den Fig. 2 bis 7 dargestellten Ausführungsformen ist im Wesentlichen gemeinsam, dass die jeweiligen, nicht näher bezeichneten Endbereiche des ersten und/oder des zweiten Umlenkhebels 9a bzw. 9b mit dem jeweiligen ersten und/oder zweiten Betätigungszug 4a bzw. 4b wirksam verbunden sind, nämlich insbesondere über einen nicht näher bezeichneten Gelenkkopf verbunden sind.

Gut zu erkennen sind die Betätigungszüge 4a und 4b in den Fig. 2a, 2b sowie in den Fig. 6a und 6b. Zur Führung des ersten und/oder des zweiten Betätigungszuges bzw. zu dessen jeweiliger Richtungsvorgabe im Bereich des Gehäuses 2 der Schaltwählhebelvorrichtung 1 ist nun ein erstes und ein zweites Betätigungszug-Halteelement 5a und 5b vorgesehen, das jeweils an einem gemeinsamen Widerlagerelement 6 vorgesehen, angeordnet und/oder ausgebildet ist. Das erste und zweite Betätigungszug-Halteelement 5a und 5b sowie das Widerlagerelement 6 sind im Wesentlichen auch entsprechend benachbart bzw. in Nachbarschaft leicht beabstandet zu den Endbereichen der Umlenkhebel 9a und 9b vorgesehen, da die Endbereiche der Umlenkhebel 9a und 9b mit den Betätigungszügen 4a und 4b mit Hilfe der nicht im einzelnen dargestellten Gelenkköpfe wirksam verbunden sind.

Weiterhin ist aus den Fig. 2a, 2b, 3, 4 sowie 5 bis 7 insbesondere auch eine jeweilige Einstellvorrichtung 10a und 10b in schematischer Weise dargestellt, mit deren Hilfe die wirksame Länge des jeweiligen Betätigungszuges 4a und 4b eingestellt werden kann, wobei diese Einstellvorrichtungen 10a und 10b im Wesentlichen zwischen den jeweiligen Endbereichen der Umlenkhebel 9a und 9b und dem jeweiligen Betätigungszug-Halteelement 5a und 5b vorgesehen bzw. angeordnet sind, so wie dieses aus den Fig. 2 bis 7 zumindest teilweise ersichtlich ist.

Von besonderem Vorteil ist auch, dass, wenn die Schaltwählhebelvorrichtung 1 für ein Asymmetrie-Fahrzeug oder für ein Symmetrie-Fahrzeug ausgebildet ist, der gleiche Tunneldurchtritt 7 verwendet werden kann, so dass der Tunneldurchtritt 7, der Tunnel sowie die anderen Komponenten des Fahrzeuges eben nicht verändert werden müssen. Letzteres ist insbesondere aus den Fig. 2a und 2b ersichtlich, wo der Unterschied in der Positionierung der jeweiligen Schaltwählhebelvorrichtung 1, nämlich für ein Symmetrie-Fahrzeug (vgl. Fig. 2a) bzw. für ein Asymmetrie-Fahrzeug (vgl. Fig. 2b) in Kombination mit der jeweiligen Führung bzw. Ausrichtung der Betätigungszüge 4a und 4b dargestellt ist. Insbesondere sind daher das erste und zweite Betätigungszug-Haltelement 5a und 5b an einem gemeinsamen Widerlagerelement 6 angeordnet bzw. ausgebildet, wobei das Widerlagerelement 6 für eine Schaltwählhebelvorrichtung 1, die für ein Asymmetrie-Fahrzeug ausgebildet ist, leicht anders ausgebildet sein kann, als für eine Schaltwählhebelvorrichtung 1, die für ein Symmetrie-Fahrzeug ausgebildet ist. Das jeweilige Widerlagerelement 6 wird dann relativ an dem Gehäuse 2 in einer jeweiligen relativ anderen Position angeordnet bzw. befestigt und/oder positioniert, so wie insbesondere in den Fig. 3a oder 4a dargestellt.
Bei der Ausbildung der Schaltwählhebelvorrichtung 1 für ein Symmetrie-Fahrzeug wird eine Führung der Betätigungszüge 4a und 4b, zumindest in deren oberen Bereichen im Wesentlichen schräg seitlich nach unten aus dem Gehäuse 2 heraustretend realisiert, so wie in Fig. 3a, 3b, 6a und 6b und in Fig. 2a entsprechend schematisch dargestellt. Wird nun, wenn die Schaltwählhebelvorrichtung 1 für ein Asymmetrie-Fahrzeug ausgebildet ist, die Führung der Betätigungszüge 4a und 4b, zumindest in deren oberen Bereichen im Wesentlichen in Richtung der Gehäusehochachse, nämlich in Richtung der Z-Achse bzw. parallel zur Gehäusehochachse (zur Z-Achse) realisiert, so wie in den Fig. 2b, 4a, 4b und 7a bzw. 7b schematisch dargestellt, sind hier dann die Betätigungszug-Haltelemente 5a und 5b und/oder das Wiederlagerelement 6 entsprechend relativ anders zu den verschwenkbaren Umlenkhebeln 9a und 9b angeordnet und/oder positioniert als wenn die Schaltwählhebelvorrichtung 1 für ein Symmetrie-Fahrzeug ausgebildet ist.

Zum besseren Verständnis der Kinematik bzw. der winkeligen Anordnung der jeweiligen Komponenten darf nun insbesondere auf die Fig. 8 verwiesen werden:
Fig. 8 zeigt in schematischer Darstellung hier zumindest einen Umlenkhebel, den ersten oder den zweiten Umlenkhebel 9a bzw. 9b und dessen jeweilige Schwenkachse SW, also dessen Schwenkachse SW₉ₐ bzw. SW_{9b}.

In der bevorzugten Ausführungsform der Schaltwählhebelvorrichtung 1 ist die jeweilige Schwenkachse SW des ersten und/oder des zweiten Umlenkhebels 9a bzw. 9b, also die jeweilige Schwenkachse SW₉ₐ bzw. SW_{9b} in einem bestimmten ersten Winkel a schräg zur Gehäusequerachse, also zur Y-Achse oder in einem bestimmten ersten Winkel α schräg zu einer Parallelen der Gehäusequerachse, also zur Y-Achse angeordnet. Bei dem hier in Fig. 8 dargestellten bevorzugten Fall ist die jeweilige Schwenkachse SW₉ₐ bzw. SW_{9b} nun in einem ersten Winkel schräg zur Gehäusequerachse, nämlich zur Y-Achse angeordnet, da das hier gewählte Koordinatensystem, nämlich die X-, Y- und Z-Achse entsprechend so gelegt bzw. positioniert ist.

Die jeweilige Schwenkachse des ersten und/oder des zweiten Umlenkhebels SW₉ₐ bzw. SW_{9b} liegt nun auch insbesondere in der durch die Gehäusehochachse, nämlich durch die Z-Achse und durch die Gehäusequerachse, nämlich durch die Y-Achse gebildeten Ebene (oder in einer hierzu parallelen Ebene, wenn der Ursprung des Koordinatensystems entlang der X-Achse entsprechend verschoben wird).

Bei der bevorzugten Ausführungsform der Schaltwählhebelvorrichtung 1 und zwar unabhängig davon, ob diese für ein Symmetrie-Fahrzeug oder für ein Asymmetrie-Fahrzeug ausgebildet ist, sind die Betätigungszug-Halteelemente 5a bzw. 5b und/oder das Widerlagerelement 6 so angeordnet und/oder ausgebildet, so dass eine Führung bzw. Richtungsvorgabe der Betätigungszüge 4a und 4b im Wesentlichen in einer Ebene realisiert ist, die durch die Gehäusehochachse, nämlich durch die Z-Achse und durch die Gehäusequerachse, nämlich durch die Y-Achse gebildet wird bzw. hierzu parallel ist, wobei der letztere Fall der "parallelen Ebene" hier in der Fig. 8 dargestellt ist.

Die Richtungen der Betätigungszüge 4a und 4b bzw. die hier wirkenden Kräfte sind durch entsprechende Pfeile, die mit dem Buchstaben "F" bezeichnet sind, schematisch dargestellt, wobei hier in der Fig. 8 beide Fälle dargestellt sein sollen, nämlich der Fall, dass die Schaltwählhebelvorrichtung 1 für ein Symmetrie-Fahrzeug ausgebildet ist (Darstellung der Führung/Richtung der Betätigungszüge 4a bzw. 4b durch den Pfeil F_{RL}) sowie auch der Fall, dass die Schaltwählehebelvorrichtung 1 für ein Asymmetrie-Fahrzeug ausgebildet ist (Darstellung der Führung/Richtung der Betätigungszüge 4a bzw. 4b durch den Pfeil F_{LL}).

In der Fig. 8 ist nämlich dargestellt, anhand des Koordinatensystems zunächst die schräge Achse SW eines ersten oder zweiten Umlenkhebels 9a bzw. 9b, die schräg im bestimmten ersten Winkel α zur Y-Achse, also zur Gehäusequerachse verläuft. Der jeweilige Umlenkhebel 9a bzw. 9b wird um diese Schwenkachse SW also um SW₉ₐ bzw. SW_{9b} entsprechend verschwenkt, nämlich dann, wenn der erste bzw. zweite Umlenkhebel 9a und/oder 9b durch die Kraft F_{Stange} bewegt wird, wobei die Kraft F_{Stange}, (je nach dem), durch die jeweilige erste oder zweite Koppelstange 8a bzw. 8b aufgebracht wird und dann der jeweilige erste oder zweite Umlenkhebel 9a und 9b im Wesentlichen in einer bestimmten Ebene verschwenkt wird, die durch eine Winkelhalbierende WH definiert ist, was im Folgenden noch näher erläutert werden darf.

Für den Fall, dass die Schaltwählhebelvorrichtung 1 für ein Symmetrie-Fahrzeug ausgebildet ist, wird nun eine spezifische Führung der Betätigungszüge 4a und 4b im Wesentlichen in der Nachbarschaft zu den Endbereichen der Umlenkhebel 9a und 9b in einem bestimmen zweiten Winkel β schräg zur Gehäusehochachse, nämlich zur Z-Achse (bzw. schräg zu einer Parallelen der Gehäusehochachse, nämlich zur Z-Achse realisiert) sowie aus Fig. 8 erkennbar. Hierzu sind auch die Betätigungszug-Halteelemente 5a und 5b und/oder das Widerlagerelement 6 entsprechend relativ zu den entsprechenden Umlenkhebeln 9a und 9b dann an dem Gehäuse 2 der Schaltwählhelbelvorrichtung 1 angeordnet und/oder positioniert, nämlich so wie aus den Fig. 3a, 3b bzw. aus den Fig. 6a und 6b ersichtlich. Insbesondere ist nun der bestimmte zweite Winkel β im Wesentlichen aber doppelt so groß wie der bestimmte erste Winkel a, es gilt insbesondere daher β = 2 α.

Dies führt zunächst dazu, dass eine Führung bzw. Richtungsvorgabe der Betätigungszüge 4a und 4b im Wesentlichen schräg seitlich nach unten aus dem Gehäuse 2 heraustretend gemäß dem Pfeil F_{RL} realisiert ist, hat aber noch weitere zusätzliche Vorteile, die im Folgenden nun erläutert werden dürfen:
Ist nämlich die Schaltwählhebelvorrichtung 1 für ein Asymmetrie-Fahrzeug ausgebildet, was in den Fig. 2b, 4a, 4b sowie auch in der Fig. 7a und 7b dargestellt ist, wird die Führung der Betätigungszüge 4a und 4b im Wesentlichen in Richtung der Gehäusehochachse, nämlich in Richtung der Z-Achse (bzw. einer Parallelen zur Gehäusehochachse, nämlich zur Z-Achse) realisiert. Hierbei sind dann die Betätigungszug-Haltelemente 5a und 5b und/oder das Widerlagerelement 6 entsprechend relativ zu den verschwenkbaren Umlenkhebeln 9a und 9b so angeordnet und/oder positioniert, so dass die oben genannte Führung der Betätigungszüge 4a und 4b verwirklicht ist, nämlich insbesondere in Richtung des Pfeiles F_{LL}.

In Fig. 8 sind nun beide Fälle dargestellt, nämlich wenn die Schaltwählhebelvorrichtung 1 für ein Symmetrie-Fahrzeug ausgebildet ist, ist dann die Führung der Betätigungszüge 4a bzw. 4b mit dem Pfeil F_{RL} dargestellt und für den Fall, dass die Schaltwählhebelvorrichtung 1 für ein Asymmetrie-Fahrzeug ausgebildet ist, dann die Führung der Betätigungszüge 4a, 4b mit dem Pfeil F_{LL} dargestellt. Aus der Fig. 8 ist daher auch ersichtlich, dass der jeweilige Umlenkhebel 9a bzw. 9b im Wesentlichen in einer Ebene verschwenkbar ist, die durch eine den bestimmtem zweiten Winkel β halbierende Winkelhalbierende WH bestimmt ist. Diese Winkelhalbierende ist hier gestrichelt dargestellt und mit jeweiligen kurzen "Pfeilenden" begrenzt.

Wie die Fig. 8 weiter deutlich macht entspricht der Winkel β₁ zwischen der Winkelhalbierenden WH und der Führung/F_{RL} der Betätigungszüge 4a bzw. 4b, wenn die Schaltwählhebelvorrichtung 1 für ein Symmetrie-Fahrzeug ausgebildet ist, im Wesentlichen dem bestimmten ersten Winkel a, also α = β₁. Für den anderen Fall, dass wenn die Schaltwählhebelvorrichtung 1 für ein Asymmetrie-Fahrzeug ausgebildet ist, zeigt die Fig. 8, dass der Winkel β₂ zwischen der Winkelhalbierenden WH und der Führung/F_{LL} der Betätigungszüge 4a bzw. 4b (dargestellt durch F_{LL}), im Wesentlichen dem bestimmten ersten Winkel α entspricht, es gilt also β₂ = a. Insbesondere gilt β, + β₂ = β = 2 a.

Die Fig. 8 verdeutlicht aber insbesondere nun, dass die jeweiligen Bewegungen/Auslenkungen der Betätigungszüge 4a oder 4b bei einer für ein Asymmetrie-Fahrzeug bzw. für ein Symmetrie-Fahrzeug ausgebildeten Schaltwählhebelvorrichtung 1 in Richtung der Gehäusehochachse, nämlich in Richtung der Z-Achse, und in Richtung der Gehäusequerachse, nämlich in Richtung der Y-Achse im Wesentlichen gleich sind. Letzteres liegt insbesondere an der Schwenkbewegung des jeweiligen ersten bzw. zweiten Umlenkhebels 9a bzw. 9b in der durch die Winkelhalbierende WH definierten Ebene.

Insbesondere aufgrund der schrägen Anordnung der Schwenkachse SW des jeweiligen ersten und zweiten Umlenkhebels 9a, 9b bzw. der jeweiligen Schwenkachse SW₉ₐ und SW_{9b}, so wie oben erläutert, und wie auch aus den Fig. 2 bis 8 ersichtlich, kann nun für eine für ein Asymmetrie-Fahrzeug ausgebildete Schaltwählhebelvorrichtung 1 und für eine für ein Symmetrie-Fahrzeug ausgebildete Schaltwählhebelvorrichtung 1 auch ein gemeinsamer bzw. einheitlicher Tunneldurchtritt 7 verwendet werden. Anders ausgedrückt, andere Komponenten des Kraftfahrzeugs müssen auch bei unterschiedlicher Anordnung der Schaltwählhebelvorrichtung 1 für ein Asymmetrie-Fahrzeug bzw. für ein Symmetrie-Fahrzeug nicht verändert werden, was große Vorteile mit sich bringt.

Insbesondere ist das erste und zweite Betätigungszug-Halteelement 5a bzw. 5b im Wesentlichen zumindest teilweise jeweils hülsenförmig ausgebildet, wobei die Längsachse der hülsenförmig ausgebildeten Betätigungszug-Halteelemente 5a und 5b im Wesentlichen auch die Führungsrichtung der jeweiligen oberen Bereiche der Betätigungszüge 4a bzw. 4b gemäß den Pfeilen F_{RL} bzw. F_{LL} vorgibt und im Wesentlichen auch mit definiert. Daher sind die Betätigungszug-Halteelemente 5a und 5b im Sinne der in Fig. 8 dargestellten Ausrichtungen der jeweiligen Pfeile F_{RL} bzw. F_{LL} entsprechend dann angeordnet und/oder mit Hilfe eines gemeinsamen Widerlagerelementes 6 positioniert, so wie aus den Fig. 2 bis 7 ersichtlich.

Im Ergebnis sind die eingangs beschriebenen Nachteile vermieden und entsprechende Vorteile erzielt.

### Bezugszeichenliste

- 1: Schaltwählhebelvorrichtung
- 2: Gehäuse
- 3: Schaltwählhebel
- 4a: erster Betätigungszug
- 4b: zweiter Betätigungszug
- 5a: erstes Betätigungszug-Halteelement
- 5b: zweites Betätigungszug-Halteelement
- 6: Widerlagerelement
- 7: Tunneldurchtritt
- 8a: erste Koppelstange
- 8b: zweite Koppelstange
- 9a: erster Umlenkhebel
- 9b: zweiter Umlenkhebel
- 10a: Einstellvorrichtung
- 10b: Einstellvorrichtung
- SW: Schwenkachse
- SW₉ₐ: Schwenkachse erster Umlenkhebel 9a
- SW_{9b}: Schwenkachse zweiter Umlenkhebel 9b
- WH: Winkelhalbierende
- F_{RL}: Führung Betätigungszug Symmetrie-Fahrzeug
- F_{LL}: Führung Betätigungszug Asymmetrie-Fahrzeug
- α: erster Winkel
- β: zweiter Winkel
- β₁: Winkel
- β₂: Winkel

## Patentansprüche

1. Schaltwählhebelvorrichtung (1) zum Wählen und/oder Schalten von Gangstufen eines Schaltgetriebes eines Kraftfahrzeuges, wobei die Schaltwählhebelvorrichtung ein Gehäuse (2) aufweist, wobei mindestens ein Schaltwählhebel (3) vorgesehen ist, wobei der Schaltwählhebel (3) mit einer ersten Koppelstange (8a) zum Wählen der jeweiligen Gangstufen und mit einer zweiten Koppelstange (8b) zum Schalten der jeweiligen Gangstufen funktional wirksam verbunden ist, wobei ein erster und ein zweiter Umlenkhebel (9a/9b) zumindest teilweise verschwenkbar innerhalb des Gehäuses (2) angeordnet und/oder gelagert sind, wobei die erste Koppelstange (8a) mit dem ersten Umlenkhebel (9a) und die zweite Koppelstange (8b) mit dem zweiten Umlenkhebel (9b) wirksam verbunden ist, wobei der erste Umlenkhebel (9a) mit einem ersten Betätigungszug (4a) und der zweite Umlenkhebel (9b) mit einem zweiten Betätigungszug (4b) wirksam verbunden ist, und wobei das Gehäuse (2) bei im Kraftfahrzeug eingebautem Zustand eine im Wesentlichen vertikal, insbesondere parallel zur Fahrzeug-Hochachse verlaufende Gehäusehochachse (Z-Achse), eine im Wesentlichen quer, insbesondere parallel zur Fahrzeug-Querachse verlaufende Gehäusequerachse (Y-Achse), und eine im Wesentlichen längs, insbesondere parallel zur Fahrzeug-Längsachse verlaufende Gehäuselängsachse (X-Achse) aufweist, **dadurch gekennzeichnet, dass** die jeweilige Schwenkachse (SW) des ersten und/oder zweiten Umlenkhebels (9a/9b) in einem bestimmten ersten Winkel (α) schräg zu der aus Gehäuselängsachse (X-Achse) und Gehäusequerachse (Y-Achse) gebildeten Ebene angeordnet ist bzw. sind.

2. Schaltwählhebelvorrichtung nach Anspruch 1, **dadurch gekennzeichnet, dass** die jeweilige Schwenkachse (SW) des ersten und/oder zweiten Umlenkhebels (9a/9b) in dem bestimmten ersten Winkel (α) schräg zur Gehäusequerachse (Y-Achse) oder in dem bestimmten ersten Winkel schräg zu einer Parallelen der Gehäusequerachse (Y-Achse) angeordnet ist bzw. sind, wobei die jeweilige Schwenkachse (SW) des ersten und/oder des zweiten Umlenkhebels (9a/9b)in der durch die Gehäusehochachse (Z-Achse) und durch die Gehäusequerachse (Y-Achse) gebildeten Ebene oder in einer hierzu parallelen Ebene liegt bzw. liegen.

3. Schaltwählhebelvorrichtung nach Anspruch 1 oder 2, **dadurch gekennzeichnet, dass** jeweilige Endbereiche des ersten und/oder des zweiten Umlenkhebels (9a/9b) wirksam mit dem jeweiligen ersten und/oder zweiten Betätigungszug (4a/4b), insbesondere über einen Gelenkkopf verbunden sind, wobei zur Führung des ersten und/oder zweiten Betätigungszuges (4a/4b) im Wesentlichen benachbart zu den Endbereichen der Umlenkhebel (9a/9b) ein erstes und/oder ein zweites Betätigungszug-Halteelement (5a/5b) vorgesehen ist.

4. Schaltwählhebelvorrichtung nach Anspruch 3, **dadurch gekennzeichnet, dass** das erste und zweite Betätigungszug-Halteelement (5a/5b) an einem gemeinsamen Widerlagerelement (6) angeordnet und/oder befestigt sind.

5. Schaltwählhebelvorrichtung nach einem der Ansprüche 3 bis 4, **dadurch gekennzeichnet, dass** die Betätigungszug-Haltelemente (5a/5b) und/oder das Widerlagerelement (6) so angeordnet und/oder ausgebildet sind, so dass eine Führung der Betätigungszüge (4a/4b) im Wesentlichen in einer Ebene realisiert ist, die durch die Gehäusehochachse (Z-Achse) und durch die Gehäusequerachse (Y-Achse) gebildeten Ebene definiert ist bzw. parallel hierzu ist.

6. Schaltwählhebelvorrichtung nach einem der Ansprüche 3 bis 5, **dadurch gekennzeichnet, dass** die Schaltwählhebelvorrichtung (1) für ein Fahrzeug ausgebildet ist, das die Schaltwählhebelvorrichtung (1) in der anderen Längshälfte des Kraftfahrzeugs als einen Tunneldurchtritt (7) und/oder getriebeseitige Schaltbetätigungsvorrichtung aufweist, wobei die Führung der Betätigungszüge (4a/4b) in der Nachbarschaft zu den Endbereichen der Umlenkhebel in einem bestimmten zweiten Winkel (β) schräg zur Gehäusehochachse (Z-Achse) bzw. schräg zu einer Parallelen der Gehäusehochachse (Z-Achse) realisiert ist und die Betätigungszug-Halteelemente (5a/5b) und/oder das Widerlagerelement (6) entsprechend relativ zu den verschwenkbaren Umlenkhebeln (9a/9b) angeordnet und/oder positioniert sind.

7. Schaltwählhebelvorrichtung nach dem Anspruch 6, **dadurch gekennzeichnet, dass** der bestimmte zweite Winkel (β) im Wesentlichen doppelt so gross ist wie der bestimmte erste Winkel (α).

8. Schaltwählhebelvorrichtung nach einem der Ansprüche 6 oder 7, **dadurch gekennzeichnet, dass** eine Führung der Betätigungszüge (4a/4b) im Wesentlichen schräg seitlich nach unten aus dem Gehäuse (2) heraustretend realisiert ist.

9. Schaltwählhebelvorrichtung nach einem der Ansprüche 3 bis 5, **dadurch gekennzeichnet, dass** die Schaltwählhebelvorrichtung (1) für ein Fahrzeug ausgebildet ist, das die Schaltwählhebelvorrichtung (1) in der gleichen Längshälfte des Kraftfahrzeugs wie einen Tunneldurchtritt (7) und/oder getriebeseitige Schaltbetätigungsvorrichtung aufweist, wobei die Führung der Betätigungszüge (4a/4b) im Wesentlichen in Richtung der Gehäusehochachse (Z-Achse) bzw. parallel zur Gehäusehochachse (Z-Achse) realisiert ist und die Betätigungszug-Halteelemente (5a/5b) und/oder das Widerlagerelement (6) entsprechend relativ zu den verschwenkbaren Umlenkhebeln (9a/9b) angeordnet und/oder positioniert sind.

10. Schaltwählhebelvorrichtung nach einem der Ansprüche 6 bis 8, **dadurch gekennzeichnet, dass** die jeweiligen Umlenkhebel (9a/9b) im Wesentlichen in einer jeweiligen Ebene, die durch eine den bestimmten zweiten Winkel (β) jeweils halbierende Winkelhalbierende (WH) bestimmt ist, verschwenkbar sind.

11. Schaltwählhebelvorrichtung nach Anspruch 10, **dadurch gekennzeichnet, dass** der Winkel (β₁, β₂) zwischen der Winkelhalbierenden (WH) und der Führung der Betätigungszüge, wenn die Schaltwählhebelvorrichtung (1) für ein Fahrzeug ausgebildet ist, das die Schaltwählhebelvorrichtung (1) in der anderen Längshälfte des Kraftfahrzeugs als einen Tunneldurchtritt (7) und/oder getriebeseitige Schaltbetätigungsvorrichtung aufweist, im Wesentlichen dem bestimmten ersten Winkel (α) entspricht.

12. Schaltwählhebelvorrichtung nach Anspruch 10, **dadurch gekennzeichnet, dass** der Winkel (β₁, β₂) zwischen der Winkelhalbierenden (WH) und der Führung der Betätigungszüge, wenn die Schaltwählhebelvorrichtung (1) für ein Fahrzeug ausgebildet ist, das die Schaltwählhebelvorrichtung (1) in der gleichen Längshälfte des Kraftfahrzeugs wie einen Tunneldurchtritt (7) und/oder getriebeseitige Schaltbetätigungsvorrichtung aufweist, im Wesentlichen dem bestimmten ersten Winkel (α) entspricht.

13. Schaltwählhebelvorrichtung nach einem der Ansprüche 1 bis 12, **dadurch gekennzeichnet, dass** die jeweiligen Bewegungen/Auslenkungen der Betätigungszüge (4a/4b) bei einer für ein Fahrzeug, das die Schaltwählhebelvorrichtung (1) in der gleichen Längshälfte des Kraftfahrzeugs wie einen Tunneldurchtritt (7) und/oder getriebeseitige Schaltbetätigungsvorrichtung aufweist, bzw. für ein Fahrzeug, das die Schaltwählhebelvorrichtung (1) in der anderen Längshälfte des Kraftfahrzeugs als einen Tunneldurchtritt (7) und/oder getriebeseitige Schaltbetätigungsvorrichtung aufweist, ausgebildeten Schaltwählhebelvorrichtung (1) in Richtung der Gehäusehochachse (Z-Achse) und in Richtung der Gehäusequerachse (Y-Achse) im Wesentlichen gleich sind.

14. Schaltwählhebelvorrichtung nach einem der Ansprüche 3 bis 12 oder nach dem Anspruch 13 wenn abhängig von einem der Ansprüche 3 bis 12, **dadurch gekennzeichnet, dass** das erste und zweite Betätigungszug-Halteelement (5a/5b) im wesentlichen hülsenförmig ausgebildet sind, wobei die Längsachse der hülsenförmig ausgebildeten Betätigungszug-Halteelemente (5a/5b) im Wesentlichen die Führungsrichtung (F_{LL}/F_{RL}) der jeweiligen oberen Bereiche der Betätigungszüge (4a/4b) vorgibt bzw. im Wesentlichen mit definiert.

15. Kraftahrzeug **gekennzeichnet durch** eine Schaltwählhebelvorrichtung nach einem der Ansprüche 1 bis 14.

## Claims

1. A gear selection lever device (1) for selecting and/or switching gear stages of a gearbox of a motor vehicle, wherein the gear selection lever device has a housing (2), wherein at least one gear selection lever (3) is provided, wherein the gear selection lever (3) is functionally operatively connected to a first coupling rod (8a) for the selection of the respective gear stage and to a second coupling rod (8b) for the switching of the respective gear stage, wherein a first and a second deflection lever (9a/9b) is arranged and/or mounted at least partially pivotable within the housing (2), wherein the first coupling rod (8a) is operatively connected to the first deflection lever (9a) and the second coupling rod (8b) to the second deflection lever (9b), wherein the first deflection lever (9a) is operatively connected to a first actuating cable (4a) and the second deflection lever (9b) to a second actuating cable (4b), and wherein the housing (2) when installed in the motor vehicle has a substantially vertical housing vertical axis (Z-axis) running parallel to the vehicle vertical axis, a housing transverse axis (Y-axis) running substantially transversely, in particular parallel to the vehicle transverse axis, and a housing longitudinal axis (X-axis) running substantially longitudinally, in particular parallel to the vehicle longitudinal axis, **characterized in that** the respective pivot axis (SW) of the first and/or second deflection lever (9a/9b) is or are arranged at a certain first angle (α) obliquely to the plane formed from the housing longitudinal axis (X-axis) and the housing transverse axis (Y-axis).

2. The gear selection lever device according to Claim 1, **characterized in that** the respective pivot axis (SW) of the first and/or second deflection lever (9a/9b) is or are arranged at the determined first angle (α) obliquely to the housing transverse axis (Y-axis) or at the determined first angle obliquely to a parallel of the housing transverse axis (Y-axis), wherein the respective pivot axis (SW) of the first and/or of the second deflection lever (9a/9b) lies or lie in the plane formed by the housing vertical axis (Z-axis) and by the housing transverse axis (Y-axis) or in a plane parallel thereto.

3. The gear selection lever device according to Claim 1 or 2, **characterized in that** respective end regions of the first and/or of the second deflection lever (9a/9b) are operatively connected to the respective first and/or second actuating cables (4a/4b), in particular via an articulated head, wherein a first and/or a second actuating cable-holding element (5a/5b) is provided for guiding the first and/or second actuating cables (4a/4b) substantially adjacent to the end regions of the deflection lever (9a/9b).

4. The gear selection lever device according to Claim 3, **characterized in that** the first and second actuating cable-holding element (5a/5b) are arranged on and/or fastened to a common abutment element (6).

5. The gear selection lever device according to any one of Claims 3 to 4, **characterized in that** the actuating cable-holding elements (5a/5b) and/or the abutment element (6) are arranged and/or designed, so that a guidance of the actuating cables (4a/4b) is realized substantially in a plane, which is defined by the plane formed by the housing vertical axis (Z-axis) and by the housing transverse axis (Y-axis) or is parallel thereto.

6. The gear selection lever device according to any one of Claims 3 to 5, **characterized in that** the gear selection lever device (1) is designed for a vehicle, which has the gear selection lever device (1) in the other longitudinal half of the motor vehicle as a tunnel passage (7) and/or gear-side gear shift actuating device, wherein the guidance of the actuating cables (4a/4b) is realized in proximity to the end regions of the deflection lever at a certain second angle (β) obliquely to the housing vertical axis (Z-axis) or obliquely to a parallel of the housing vertical axis (Z-axis) and the actuating cable-holding elements (5a/5b) and/or the abutment element (6) are accordingly arranged and/or positioned relative to the pivotable deflection levers (9a/9b).

7. The gear selection lever device according to Claim 6, **characterized in that** the determined second angle (β) is essentially twice as large as the determined first angle (α).

8. The gear selection lever device according to any one of Claims 6 or 7, **characterized in that** a guidance of the actuating cables (4a/4b) is realized protruding substantially obliquely laterally downward from the housing (2).

9. The gear selection lever device according to any one of Claims 3 or 5, **characterized in that** the gear selection lever device (1) is designed for a vehicle, which has the gear selection lever device (1) in the same longitudinal half of the motor vehicle as a tunnel passage (7) and/or gear-side gear shift actuating device, wherein the guidance of the actuating cables (4a/4b) is realized substantially in the direction of the housing vertical axis (Z-axis) or parallel to the housing vertical axis (Z-axis) and the actuating cable-holding elements (5a/5b) and/or the abutment element (6) are accordingly arranged and/or positioned relative to the pivotable deflection levers (9a/9b).

10. The gear selection lever device according to any one of Claims 6 or 8, **characterized in that** the respective deflection levers (9a/9b) are pivotable substantially in a respective plane, which is determined by an angle bisector (WH) in each case bisecting the determined second angle (β).

11. The gear selection lever device according to Claim 10, **characterized in that** the angle (β₁, β₂) between the angle bisector (WH) and the guidance of the actuating cables, when the gear selection lever device (1) is designed for a vehicle, which has the gear selection lever device (1) in the other longitudinal half of the motor vehicle as a tunnel passage (7) and/or gear-side gear shift actuating device, corresponds substantially to the determined first angle (α).

12. The gear selection lever device according to Claim 10, **characterized in that** the angle (β₁, β₂) between the angle bisector (WH) and the guidance of the actuating cables, when the gear selection lever device (1) is designed for a vehicle, which has the gear selection lever device (1) in the same longitudinal half of the motor vehicle as a tunnel passage (7) and/or gear-side gear shift actuating device, corresponds substantially to the determined first angle (α).

13. The gear selection lever device according to any one of Claims 1 to 12, **characterized in that** the respective movements/deflections of the actuating cables (4a/4b) in the case of a gear selection lever device (1) designed for a vehicle, which has the gear selection lever device (1) in the same longitudinal half of the motor vehicle as a tunnel passage (7) and/or gear-side gear shift actuating device, or for a vehicle, which has the gear selection lever device (1) in the other longitudinal half of the motor vehicle as a tunnel passage (7) and/or gear-side gear shift actuating device, in the direction of the housing vertical axis (Z-axis) and in the direction of the housing transverse axis (Y-axis) are substantially the same.

14. The gear selection lever device according to Claims 3 to 12 or according to Claim 13, if dependent on any one of Claims 3 to 12, **characterized in that** the first and second actuating cable-holding element (5a/5b) are designed substantially sleeve-shaped, wherein the longitudinal axis of the actuating cable-holding elements (5a/5b), which are designed sleeve-shaped, specifies or substantially defines the guide direction (F_{LL}/F_{RL}) of the respective upper regions of the actuating cables (4a/4b).

15. The motor vehicle **characterized by** a gear selection lever device according to any one of Claims 1 to 14.

## Revendications

1. Dispositif à levier de changement de vitesses (1) pour la sélection et/ou le changement de rapport d'une boîte de vitesses d'un véhicule automobile, le dispositif à levier de changement de vitesses comprenant un boîtier (2), au moins un levier de changement de vitesses (3) étant prévu, le levier de changement de vitesses (3) étant relié de manière fonctionnelle avec une première tige de couplage (8a) pour la sélection des rapports correspondants et avec une deuxième tige de couplage (8b) pour le changement des rapports correspondants, un premier et un deuxième leviers de renvoi (9a/9b) étant disposés et/ou logés de manière au moins partiellement pivotante à l'intérieur du boîtier (2), la première tige de couplage (8a) étant reliée de manière fonctionnelle avec le premier levier de renvoi (9a) et la deuxième tige de couplage (8b) étant reliée de manière fonctionnelle avec le deuxième levier de renvoi (9b), le premier levier de renvoi (9a) étant relié de manière fonctionnelle avec un premier câble d'actionnement (4a) et le deuxième levier de renvoi (9b) étant relié de manière fonctionnelle avec un deuxième câble d'actionnement (4b) et le boîtier (2) comprenant, lorsqu'il est monté dans le véhicule automobile, un axe vertical de boîtier (axe Z) s'étendant globalement verticalement, plus particulièrement parallèlement à l'axe vertical du véhicule automobile, un axe transversal de boîtier (axe Y) s'étendant globalement transversalement, plus particulièrement parallèlement à l'axe transversal du véhicule et un axe longitudinal de boîtier (axe X) s'étendant globalement de manière longitudinale, plus particulièrement parallèlement à l'axe longitudinal du véhicule,
**caractérisé en ce que** l'axe de pivotement (SW) correspondant du premier et/ou du deuxième levier de renvoi (9a/9b) est disposé de manière inclinée par rapport au plan formé par l'axe longitudinal du boîtier (axe X) et l'axe transversal du boîtier (axe Y), avec un premier angle (α) déterminé.

2. Dispositif à levier de changement de vitesses selon la revendication 1, **caractérisé en ce que** l'axe de pivotement (SW) correspondant du premier et/ou du deuxième levier de renvoi (9a/9b) est disposé de manière inclinée par rapport à une parallèle à l'axe transversal du boîtier (axe Y), l'axe de pivotement (SW) correspondant du premier et/ou du deuxième levier de renvoi (9a/9b) se trouvant dans le plan formé par l'axe vertical du boîtier (axe Z) et l'axe transversal du boîtier (axe Y) ou dans un plan parallèle à celui-ci.

3. Dispositif à levier de changement de vitesses selon la revendication 1 ou 2, **caractérisé en ce que** les parties d'extrémités correspondantes du premier et/ou du deuxième levier de renvoi (9a/9b) sont reliées avec le premier et/ou le deuxième câble d'actionnement (4a/4b) respectif, plus particulièrement par l'intermédiaire d'une tête d'articulation, moyennant quoi, pour le guidage du premier et/ou du deuxième câble d'actionnement (4a/4b), globalement à proximité des parties d'extrémités des leviers de renvoi (9a/9b), est prévu un premier et/ou un deuxième élément de maintien de câble d'actionnement (5a/5b).

4. Dispositif à levier de changement de vitesses selon la revendication 3, **caractérisé en ce que** les premier et/ou deuxième éléments de maintien de câble d'actionnement (5a/5b) sont disposés et/ou fixés à un élément de contre-palier (6) commun.

5. Dispositif à levier de changement de vitesses selon l'une des revendications 3 à 4, **caractérisé en ce que** les éléments de maintien de câble d'actionnement (5a/5b) sont disposés et/ou conçus de façon à permettre un guidage des câbles d'actionnement (4a/4b) globalement dans un plan qui est défini par l'axe vertical du boîtier (axe Z) et par l'axe transversal du boîtier (axe Y) ou qui est parallèle à celui-ci.

6. Dispositif à levier de changement de vitesses selon l'une des revendications 3 à 5, **caractérisé en ce que** le dispositif à levier de changement de vitesses (1) est conçu pour un véhicule qui comprend le dispositif à levier de changement de vitesses (1) dans une moitié longitudinale du véhicule automobile différente d'un passage à tunnel (7) et/ou d'un dispositif de commande de changement de vitesses côté transmission, le guidage des câbles d'actionnement (4a/4b) étant réalisé, à proximité des parties d'extrémités des leviers de renvoi, de manière inclinée par rapport à l'axe vertical du boîtier (axe Z) ou inclinée par rapport à une parallèle à l'axe vertical du boîtier (axe Z), avec un deuxième angle (β) déterminé et les éléments de maintien des câbles d'actionnement (5a/5b) et/ou l'élément de contre-palier (6) sont disposés et/ou positionnés en conséquence par rapport aux leviers de renvoi (9a/9b) pivotants.

7. Dispositif à levier de changement de vitesses selon la revendication 6, **caractérisé en ce que** le deuxième angle (β) déterminé est globalement le double du premier angle (α) déterminé.

8. Dispositif à levier de changement de vitesses selon l'une des revendications 6 ou 7, **caractérisé en ce qu'**un guidage des câbles d'actionnement (4a/4b) est réalisé de manière globalement inclinée latéralement vers le bas en sortant du boîtier (2).

9. Dispositif à levier de changement de vitesses selon l'une des revendications 3 à 5, **caractérisé en ce que** le dispositif à levier de changement de vitesses (1) est conçu pour un véhicule qui comprend le dispositif à levier de changement de vitesses (1) dans la même moitié longitudinale du véhicule automobile qu'un passage à tunnel (7) et/ou qu'un dispositif de commande de changement de vitesses côté transmission, le guidage des câbles d'actionnement (4a/4b) étant réalisé globalement en direction de l'axe vertical du boîtier (axe Z) ou parallèlement à l'axe vertical du boîtier (axe Z) et les éléments de maintien des câbles d'actionnement (5a/5b) et/ou l'élément de contre-palier (6) sont disposés et/ou positionnés en conséquence par rapport aux leviers de renvoi (9a/9b) pivotants.

10. Dispositif à levier de changement de vitesses selon l'une des revendications 6 à 8, **caractérisé en ce que** les leviers de renvoi (9a/9b) correspondants sont pivotants dans un plan correspondant qui est défini par une bissectrice (WH) divisant en deux le deuxième angle (β) déterminé.

11. Dispositif à levier de changement de vitesses selon la revendication 10, **caractérisé en ce que** l'angle (β₁, β₂) entre la bissectrice (WH) et le guidage des câbles d'actionnement correspond globalement, lorsque le dispositif à levier de changement de vitesses (1) est conçu pour un véhicule qui comprend le dispositif à levier de changement de vitesses (1) dans une moitié longitudinale du véhicule automobile différente d'un passage à tunnel (7) et/ou d'un dispositif de commande de changement de vitesses côté transmission, au premier angle (α) déterminé.

12. Dispositif à levier de changement de vitesses selon la revendication 10, **caractérisé en ce que** l'angle (β₁, β₂) entre la bissectrice (WH) et le guidage des câbles d'actionnement correspond globalement, lorsque le dispositif à levier de changement de vitesses (1) est conçu pour un véhicule qui comprend le dispositif à levier de changement de vitesses (1) dans la même moitié longitudinale du véhicule automobile qu'un passage à tunnel (7) et/ou qu'un dispositif de commande de changement de vitesses côté transmission, au premier angle (α) déterminé.

13. Dispositif à levier de changement de vitesses selon l'une des revendications 1 à 12, **caractérisé en ce que** les mouvements/déviations des câbles d'actionnement (4a/4b), dans un dispositif à levier de changement de vitesses (1) conçu pour un véhicule qui comprend le dispositif à levier de changement de vitesses (1) dans la même moitié longitudinale du véhicule automobile qu'un passage à tunnel (7) et/ou qu'un dispositif de commande de changement de vitesses côté transmission ou pour un véhicule qui comprend le dispositif à levier de changement de vitesses (1) dans une moitié longitudinale du véhicule automobile différente d'un passage à tunnel (7) et/ou d'un dispositif de commande de changement de vitesses côté transmission, en direction de l'axe vertical du boîtier (axe Z) et en direction de l'axe transversal du boîtier (axe Y) sont globalement identiques.

14. Dispositif à levier de changement de vitesses selon l'une des revendications 3 à 12 ou selon la revendication 13 si dépendante d'une des revendications 3 à 12, **caractérisé en ce que** les premier et deuxième éléments de maintien des câbles d'actionnement (5a/5b) présentent globalement la forme de manchons, l'axe longitudinal des éléments de maintien des câbles d'actionnement (5a/5b) en forme de manchons imposant ou définissant globalement la direction de guidage (F_{LL}/F_{RL}) des parties supérieures correspondantes des câbles d'actionnement (4a/4b).

15. Véhicule automobile **caractérisé par** un dispositif à levier de changement de vitesses selon l'une des revendications 1 à 14.
